# EUROPEAN PATENT APPLICATION

(11) **EP 4 790 455 A1**
(43) Date of publication of application: **12.08.2026**
(21) Application number: 24874425.2
(22) Date of filing: 09.09.2024
(51) Int. Cl.: G01S 7/526, G01S 15/931

(54) **OBJECT DETECTION DEVICE**

(30) Priority: 02.10.2023 JP 2023171300
(71) Applicant: Aisin Corporation, Kariya-shi, Aichi-ken 448-8650 (JP)
(72) Inventor: WAKITA, Kosuke, Kariya-shi, Aichi 448-8650 (JP); SUGAE, Ippei, Kariya-shi, Aichi 448-8650 (JP)
(74) Representative: TBK
(86) International application number: PCT/JP2024/032159
(87) International publication number: WO 2025/074813

(57) **Abstract**

An object detection device includes a plurality of transmission and reception units each of which is configured to transmit a transmission wave and receive a reflected wave, a road-surface reflection intensity calculation unit configured to calculate, on a basis of the reflected wave received by each of a pair of transmission and reception units that are in a symmetrical positional relationship in a shape of a mobile object and are installed at a same height among the plurality of transmission and reception units, first road-surface reflection intensity that is intensity of a road-surface reflection wave received by one transmission and reception unit of the pair of transmission and reception units and second road-surface reflection intensity that is intensity of a road-surface reflection wave received by the other transmission and reception unit of the pair of transmission and reception units, and an abnormality detection unit configured to detect an abnormality in at least one of the pair of transmission and reception units on a basis of a difference between the first road-surface reflection intensity and the second road-surface reflection intensity.

## Description

### TECHNICAL FIELD

The present invention relates to an object detection device.

### BACKGROUND ART

In a mobile object such as a vehicle, an object detection device that detects an obstacle present around the mobile object on the basis of information such as a time of flight (TOF) or a Doppler shift obtained by transmitting and receiving ultrasonic waves or the like is used. In such an object detection device, as a technique for detecting an abnormality in a transmission and reception unit that transmits and receives ultrasonic waves, there has been disclosed a technique in which ultrasonic waves of different frequencies are transmitted from the transmission and reception unit, and the presence or absence of an abnormality in the transmission and reception unit is determined on the basis of a frequency component of a reflected wave received by the transmission and reception unit (Patent Literature 1).

### CITATION LIST

### PATENT LITERATURE

Patent Literature 1: JP 2018-54580 A

### SUMMARY OF INVENTION

### TECHNICAL PROBLEMS

However, in the conventional technique, means for generating different frequency components is essential, and complication of a configuration, an increase in cost, and the like may become problems. In addition, even if the transmission and reception unit has an abnormality, the influence thereof may not appear in the frequency component.

The present invention has been made in view of the above, and provides an object detection device capable of detecting an abnormality in a transmission and reception unit with high accuracy using a simple configuration.

### SOLUTIONS TO PROBLEMS

An object detection device according to one aspect of the present invention is an object detection device that detects an obstacle present around a mobile object on a basis of intensity of a reflected wave generated by a transmission wave transmitted from the mobile object being reflected by an object, the object detection device including a plurality of transmission and reception units each of which is configured to transmit the transmission wave and receive the reflected wave, a road-surface reflection intensity calculation unit configured to calculate, on a basis of the reflected wave received by each of a pair of transmission and reception units that are in a symmetrical positional relationship in a shape of the mobile object and are installed at a same height among the plurality of transmission and reception units, first road-surface reflection intensity that is intensity of the reflected wave from a road surface received by one transmission and reception unit of the pair of transmission and reception units and second road-surface reflection intensity that is intensity of the reflected wave from a road surface received by the other transmission and reception unit of the pair of transmission and reception units, and an abnormality detection unit configured to detect an abnormality in at least one of the pair of transmission and reception units on a basis of a difference between the first road-surface reflection intensity and the second road-surface reflection intensity.

### ADVANTAGEOUS EFFECTS OF INVENTION

According to the present invention, it is possible to provide the object detection device capable of detecting an abnormality in the transmission and reception unit with high accuracy using a simple configuration.

### BRIEF DESCRIPTION OF DRAWINGS

FIG. 1 is a diagram illustrating an example of a configuration of a vehicle according to a first embodiment.
FIG. 2 is a diagram illustrating an example of a configuration of a vehicle control system according to the first embodiment.
FIG. 3 is a diagram illustrating an example of a method of calculating a distance by a TOF method according to the first embodiment.
FIG. 4 is a diagram illustrating an example of a functional configuration of an object detection device according to the first embodiment.
FIG. 5 is a diagram illustrating an example of road-surface reflection intensity according to the first embodiment.
FIG. 6 is a flowchart illustrating an example of processing in the object detection device according to the first embodiment.
FIG. 7 is a diagram illustrating an example of a diffuse reflection region according to a second embodiment.
FIG. 8 is a flowchart illustrating an example of processing in an object detection device according to the second embodiment.

### DESCRIPTION OF EMBODIMENTS

Hereinafter, embodiments of the present invention will be described with reference to the drawings. The configurations of the embodiments described below and the functions and effects brought about by the configurations are merely examples, and the present invention is not limited to the following description.

### (First Embodiment)

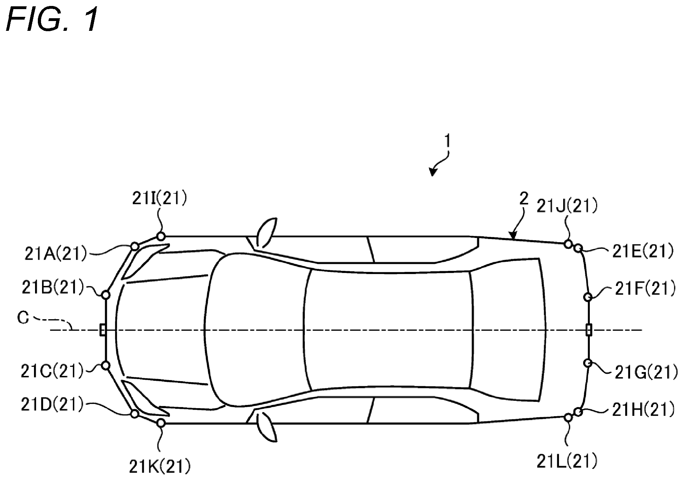

FIG. 1 is a diagram illustrating an example of a configuration of a vehicle 1 according to a first embodiment. The vehicle 1 is an example of a mobile object on which an object detection device according to the present embodiment is mounted. The object detection device according to the present embodiment is a device that detects an obstacle present around the vehicle 1 on the basis of information such as a time of flight (TOF) or a Doppler shift obtained by transmitting and receiving ultrasonic waves or the like.

The object detection device according to the present embodiment includes a plurality of transmission and reception units 21A to 21L. Hereinafter, the plurality of transmission and reception units 21A to 21L may be referred to as transmission and reception units 21 in a case where it is not necessary to distinguish the plurality of transmission and reception units 21A to 21L. Each of the transmission and reception units 21 is installed on a vehicle body 2 as an exterior of the vehicle 1, transmits an ultrasonic wave toward the outside of the vehicle body 2, and receives an ultrasonic wave generated by the ultrasonic wave being reflected by an object present outside the vehicle body 2. Hereinafter, the ultrasonic wave transmitted from the transmission and reception unit 21 may be referred to as a transmission wave, and the ultrasonic wave generated by the transmission wave being reflected by the object may be referred to as a reflected wave.

In the example illustrated in FIG. 1, four transmission and reception units 21A to 21D are arranged at the front end portion of the vehicle body 2, four transmission and reception units 21E to 21H are arranged at the rear end portion, two transmission and reception units 21I and 21J are arranged on the right side surface portion, and two transmission and reception units 21K and 21L are arranged on the left side surface portion.

In addition, in the example illustrated here, the transmission and reception units 21A, 21B, 21E, 21F, 21I, and 21J in the right half of the vehicle body 2 and the transmission and reception units 21C, 21D, 21G, 21H, 21K, and 21L in the left half of the vehicle body 2 are installed at symmetrical positions. In addition, the paired transmission and reception units 21 in the symmetrical positional relationship are installed at the same height. Note that the same height includes a height within the tolerance range that does not substantially affect processing for detecting an abnormality in the transmission and reception unit 21 to be described later.

Specifically, the paired transmission and reception units 21A and 21D are installed at symmetrical positions with respect to a center line C passing through the center of the vehicle body 2 in a left-right (width) direction and extending in a front-rear direction, and the heights of the respective installation positions from the road surface are the same. The paired transmission and reception units 21B and 21C are installed at symmetrical positions with respect to the center line C, and the heights of the respective installation positions from the road surface are the same. The paired transmission and reception units 21I and 21K are installed at symmetrical positions with respect to the center line C, and the heights of the respective installation positions from the road surface are the same. The paired transmission and reception units 21E and 21H are installed at symmetrical positions with respect to the center line C, and the heights of the respective installation positions from the road surface are the same. The paired transmission and reception units 21F and 21G are installed at symmetrical positions with respect to the center line C, and the heights of the respective installation positions from the road surface are the same. The paired transmission and reception units 21J and 21L are installed at symmetrical positions with respect to the center line C, and the heights of the respective installation positions from the road surface are the same. Note that the number and installation positions of the transmission and reception units 21 are not limited to this example.

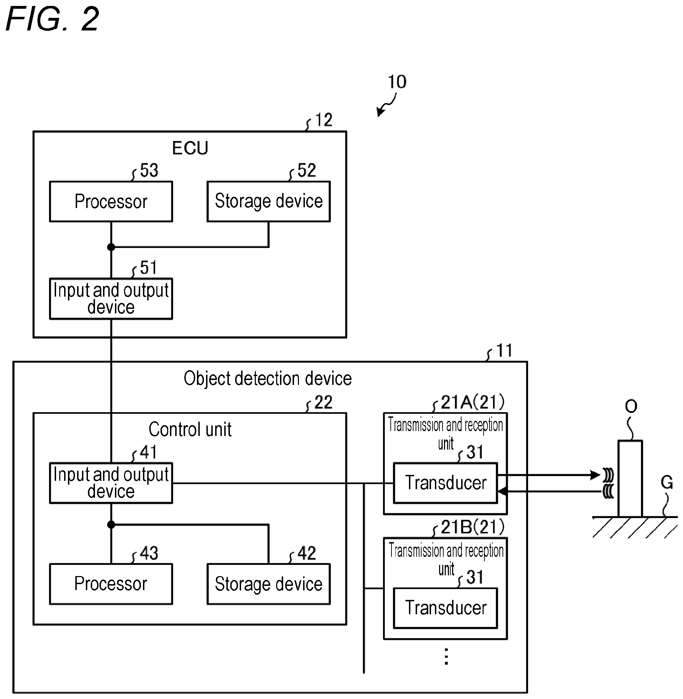

FIG. 2 is a diagram illustrating an example of a configuration of a vehicle control system 10 according to the first embodiment. The vehicle control system 10 performs processing for controlling the vehicle 1 on the basis of information output from an object detection device 11. The vehicle control system 10 according to the present embodiment includes the object detection device 11 and an ECU 12.

The object detection device 11 includes the plurality of transmission and reception units 21 and a control unit 22. Each transmission and reception unit 21 includes a transducer 31 configured using a piezoelectric element or the like, an amplifier, and the like, and achieves transmission and reception of an ultrasonic wave by vibration of the transducer 31. Specifically, each transmission and reception unit 21 transmits an ultrasonic wave generated in response to the vibration of the transducer 31 as a transmission wave, and detects the vibration of the transducer 31 caused by a reflected wave generated by the transmission wave being reflected by an object such as an obstacle O or a road surface G. The obstacle O is an object to be detected among objects present around the vehicle 1, and may be, for example, another vehicle, a road accessory, a wall surface, a person, a curbstone, a car stop, or the like. The vibration of the transducer 31 is converted into an electric signal, and a TOF corresponding to a distance from the transmission and reception unit 21 to the obstacle O, a Doppler shift corresponding to the relative speed between the vehicle 1 and the obstacle O, and the like can be acquired on the basis of the electric signal.

Note that, in the example illustrated in FIG. 2, a configuration in which both transmission of the transmission wave and reception of the reflected wave are performed using the single transducer 31 is exemplified, but the configuration of the transmission and reception unit 21 is not limited thereto. For example, like a configuration in which a transducer for transmitting the transmission wave and a transducer for receiving the reflected wave are separately provided, the transmission side and the reception side may be separated.

The control unit 22 includes an input and output device 41, a storage device 42, and a processor 43. The input and output device 41 is an interface device that enables transmission and reception of information between the control unit 22 and an external device (the transmission and reception unit 21, the ECU 12, or the like). The storage device 42 includes a main storage device such as a read only memory (ROM) and a random access memory (RAM), and an auxiliary storage device such as a hard disk drive (HDD) and a solid state drive (SSD). The processor 43 is an integrated circuit that executes various processing for implementing the functions of the control unit 22, and can be configured using, for example, a central processing unit (CPU), an application specific integrated circuit (ASIC), a field programmable gate array (FPGA), or the like that operates in accordance with a program. The processor 43 executes various arithmetic operations and control processing by reading and executing a program stored in the storage device 42.

The ECU 12 is a unit that executes various processing for controlling the vehicle 1 on the basis of information acquired from the object detection device 11 and the like. The ECU 12 includes an input and output device 51, a storage device 52, and a processor 53. The input and output device 51 is an interface device that enables transmission and reception of information between the ECU 12 and an external mechanism (the object detection device 11, a drive mechanism, a braking mechanism, a steering mechanism, a transmission mechanism, an in-vehicle display, speaker, various sensors, and the like). The storage device 52 includes a main storage device such as a ROM and a RAM, and an auxiliary storage device such as an HDD and an SSD. The processor 53 is an integrated circuit that executes various processing for implementing the functions of the ECU 12, and can be configured using, for example, a CPU, an ASIC, an FPGA, or the like. The processor 53 executes various arithmetic operations and control processing by reading and executing a program stored in the storage device 52.

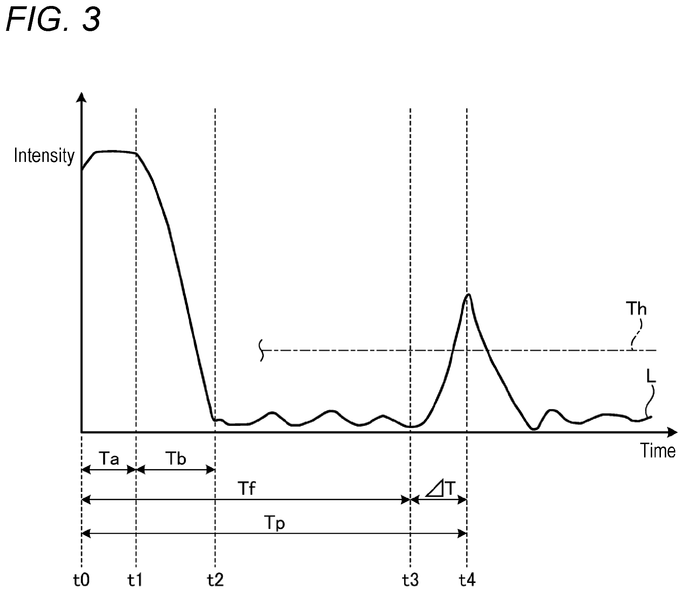

FIG. 3 is a diagram illustrating an example of a method of calculating a distance by a TOF method according to the first embodiment. FIG. 3 illustrates an envelope L indicating a time-series change in the intensity (the signal level) of an ultrasonic wave transmitted and received by the transmission and reception unit 21. In the graph illustrated in FIG. 3, the horizontal axis corresponds to time (TOF), and the vertical axis corresponds to the intensity of the ultrasonic wave transmitted and received by the transmission and reception unit 21 (the magnitude of vibration of the transducer 31).

The envelope L indicates a time-series change in intensity indicating the magnitude of vibration of the transducer 31. It can be understood from the envelope L illustrated in FIG. 3 that the transducer 31 is driven to vibrate for a time Ta starting at a timing t0, so that the transmission of a transmission wave is completed at a timing t1, and the vibration of the transducer 31 due to inertia then continues while being attenuated for a time Tb until a timing t2. Therefore, in the graph illustrated in FIG. 3, the time Tb corresponds to a so-called reverberation time.

The envelope L reaches a peak at which the magnitude of the vibration of the transducer 31 is equal to or larger than a threshold Th at a timing t4 after the elapse of a time Tp from the timing t0 at which the transmission of the transmission wave is started. The threshold Th is a value set to identify whether the vibration of the transducer 31 is caused by reception of a reflected wave from the obstacle O or by reception of a reflected wave from an object other than the obstacle O (for example, the road surface G or the like). Note that the threshold Th is shown as a constant value here, but the threshold Th may be a varying value that changes depending on the situation. Vibration having a peak equal to or larger than the threshold Th can be regarded as being caused by the reception of the reflected wave from the obstacle O.

The envelope L in this example indicates that the vibration of the transducer 31 is attenuated after the timing t4. Therefore, the timing t4 corresponds to a timing at which the reception of the reflected wave from the obstacle O is completed, in other words, a timing at which the transmission wave transmitted last at the timing t1 returns as the reflected wave.

Furthermore, in the envelope L, a timing t3 as the start point of the peak at the timing t4 corresponds to a timing at which the reception of the reflected wave from the obstacle O starts, in other words, a timing at which the transmission wave transmitted first at the timing t0 returns as the reflected wave. Therefore, the time ΔT between the timing t3 and the timing t4 is equal to the time Ta as the transmission time of the transmission wave.

From the above, in order to obtain the distance from the transmission and reception unit 21, which is the transmission and reception source of the ultrasonic wave, to the obstacle O using the TOF, it is necessary to obtain a time Tf between the timing t0 at which the transmission wave starts to be transmitted and the timing t3 at which the reflected wave starts to be received. The time Tf can be obtained by subtracting the time ΔT equal to the time Ta as the transmission time of the transmission wave from the time Tp as the difference between the timing t0 and the timing t4 at which the intensity of the reflected wave exceeds the threshold Th and reaches the peak.

The timing t0 at which the transmission wave starts to be transmitted can be easily specified as a timing at which the object detection device 200 starts to operate, and the time Ta as the transmission time of the transmission wave is determined in advance by setting or the like. Therefore, by specifying the timing t4 at which the intensity of the reflected wave reaches the peak equal to or larger than the threshold Th, the distance from the vehicle 1 (the transmission and reception unit 21 that is the transmission and reception source of the ultrasonic wave) to the obstacle O can be obtained. Note that the above calculation method is an example, and the distance from the vehicle 1 to the obstacle O only needs to be calculated appropriately using a known or new method.

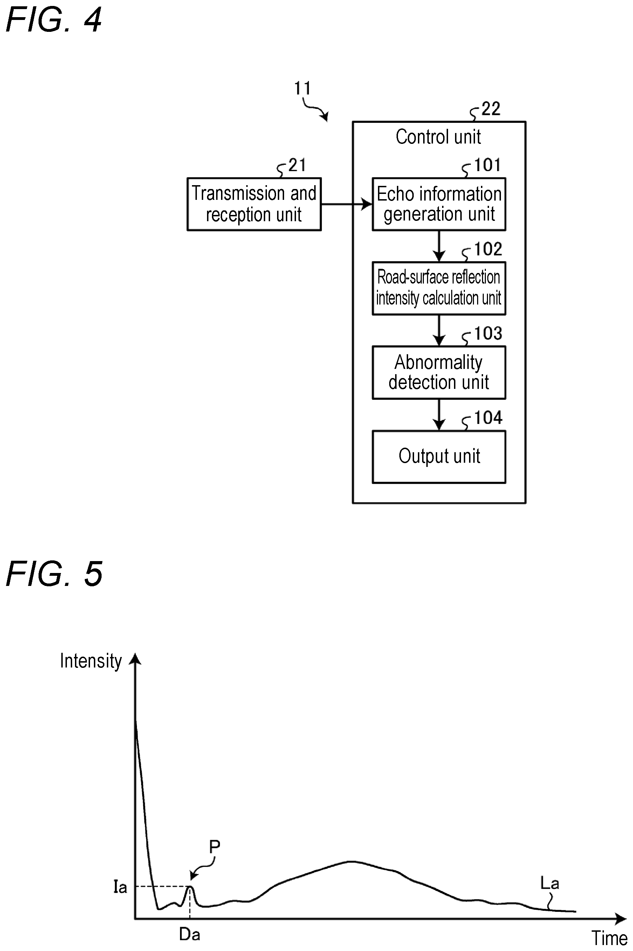

FIG. 4 is a diagram illustrating an example of a functional configuration of the object detection device 11 according to the first embodiment. The object detection device 11 (the control unit 22) according to the present embodiment includes an echo information generation unit 101, a road-surface reflection intensity calculation unit 102, an abnormality detection unit 103, and an output unit 104. These functional units can be implemented by, for example, cooperation of hardware and software (a program or the like) of the object detection device 11 illustrated in FIG. 2. In addition, at least a part of these functional units may be implemented by dedicated hardware (a circuit).

The echo information generation unit 101 generates echo information indicating a time-series change in the intensity of the reflected wave for each transmission and reception unit 21 on the basis of the information acquired from each transmission and reception unit 21. The echo information may include, for example, data related to the envelope L illustrated in FIG. 3.

The road-surface reflection intensity calculation unit 102 calculates first road-surface reflection intensity and second road-surface reflection intensity on the basis of a reflected wave (echo information indicating a time-series change in the reflected wave) received by each of a pair of transmission and reception units 21 (for example, the transmission and reception units 21A and 21D, the transmission and reception units 21B and 21C, or the like) that are in a symmetrical positional relationship in the shape of the vehicle 1 (the vehicle body 2) and installed at the same height among the plurality of transmission and reception units 21. The first road-surface reflection intensity is the intensity of a road-surface reflection wave (a reflected wave generated by a transmission wave transmitted from one transmission and reception unit being reflected by a road surface) received by one transmission and reception unit (for example, the transmission and reception unit 21A) of the pair of transmission and reception units 21. The second intensity is the intensity of a road-surface reflection wave (a reflected wave generated by a transmission wave transmitted from the other transmission and reception unit being reflected by a road surface) received by the other transmission and reception unit (for example, the transmission and reception unit 21B) of the pair of transmission and reception units 21.

The abnormality detection unit 103 detects an abnormality in at least one of the pair of transmission and reception units 21 on the basis of the difference between the first road-surface reflection intensity and the second road-surface reflection intensity. For example, in a case where the difference between the first road-surface reflection intensity and the second road-surface reflection intensity is larger than a predetermined threshold, the abnormality detection unit 103 determines that at least one of the pair of transmission and reception units 21 has an abnormality.

At this time, there may be an error between the first road-surface reflection intensity and the second road-surface reflection intensity due to a configuration condition of each transmission and reception unit 21 even when the pair of transmission and reception units 21 is in a normal state. The configuration condition may be, for example, a slight deviation of the installation position generated at the time of assembling, the characteristics of the transducer 31, or the like. Therefore, on the basis of at least one of the first road-surface reflection intensity and the second road-surface reflection intensity in the normal state, the abnormality detection unit 103 may correct the difference used at the time of the abnormality detection so as to reduce the influence of the error between the first road-surface reflection intensity and the second road-surface reflection intensity generated between the pair of normal transmission and reception units 21. Note that the correction of the difference may be achieved by correcting at least one of the first road-surface reflection intensity and the second road-surface reflection intensity used at the time of the abnormality detection.

The output unit 104 outputs a detection result by the abnormality detection unit 103 by a predetermined method. The method of outputting the detection result may be appropriately determined in accordance with the specification of the vehicle 1 or the like, and for example, in a case where it is determined that there is an abnormality, it is conceivable to output an alarm to an output device such as an in-vehicle display or a speaker, or output a signal indicating that an abnormality has occurred to the ECU 12.

FIG. 5 is a diagram illustrating an example of road-surface reflection intensity Ia according to the first embodiment. FIG. 5 illustrates an envelope La obtained when the normal transmission and reception unit 21 transmits and receives an ultrasonic wave in a state where the vehicle 1 is stopped.

On such an envelope La, as illustrated in FIG. 5, a peak P due to a road-surface reflection wave from the road surface directly below the installation position of the transmission and reception unit 21 appears. A distance Da corresponding to the peak P substantially matches the height of the installation position of the transmission and reception unit 21 from the road surface. The road-surface reflection intensity Ia corresponding to the peak P is a relatively stable value when the transmission and reception unit 21 is in a normal state. Note that the distance Da may slightly vary from the position directly below the transmission and reception unit 21 due to the directivity of the ultrasonic wave transmitted from the transmission and reception unit 21.

The object detection device 11 according to the present embodiment uses the road-surface reflection intensity Ia described above to detect an abnormality in the pair of transmission and reception units 21 that are in the symmetrical positional relationship and are installed at the same height. That is, in a case where both of the pair of transmission and reception units 21 are in the normal state, the road-surface reflection intensity Ia (the first road-surface reflection intensity) of one transmission and reception unit 21 (for example, the transmission and reception unit 21A) and the road-surface reflection intensity Ia (the second road-surface reflection intensity) of the other transmission and reception unit 21 (for example, the transmission and reception unit 21D) substantially match with each other. On the other hand, in a case where at least one of the pair of transmission and reception units 21 has an abnormality, the difference between the road-surface reflection intensity Ia (the first road-surface reflection intensity) of one transmission and reception unit 21 and the road-surface reflection intensity Ia (the second road-surface reflection intensity) of the other transmission and reception unit 21 increases. That is, in a case where the difference between the first road-surface reflection intensity and the second road-surface reflection intensity is larger than a threshold, it can be determined that at least one of the pair of transmission and reception units 21 has an abnormality.

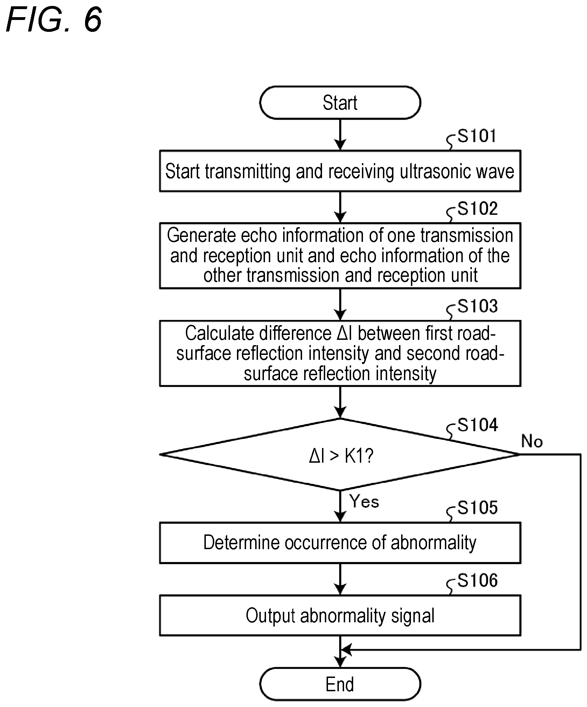

FIG. 6 is a flowchart illustrating an example of processing in the object detection device 11 according to the first embodiment. When the transmission and reception unit 21 starts transmitting and receiving an ultrasonic wave in step S101, the echo information generation unit 101 generates echo information of one transmission and reception unit (here, the transmission and reception unit 21A) and echo information of the other transmission and reception unit (here, the transmission and reception unit 21D) of the pair of transmission and reception units (here, the transmission and reception units 21A and 21D) in step S102. The echo information may be, for example, information including the envelope La illustrated in FIG. 5.

In step S103, the road-surface reflection intensity calculation unit 102 calculates the difference ΔI between the first road-surface reflection intensity Ia corresponding to one transmission and reception unit 21A and the second road-surface reflection intensity Ia corresponding to the other transmission and reception unit 21D on the basis of the generated echo information.

In step S104, the abnormality detection unit 103 determines whether or not the difference ΔI is larger than a threshold K1. In step S104, in a case where the difference ΔI is not larger than the threshold K1 (S104: No), the abnormality detection unit 103 determines that the pair of transmission and reception units 21A and 21D is normal, and this routine ends.

In step S104, in a case where the difference ΔI is larger than the threshold K1 (S104: Yes), in step S105, the abnormality detection unit 103 determines that at least one of the pair of transmission and reception units 21A and 21D has an abnormality, and in step S106, the output unit 104 outputs an abnormality signal indicating the occurrence of the abnormality.

As described above, according to the present embodiment, the abnormality in the pair of transmission and reception units is detected on the basis of the difference between the road-surface reflection intensities (the first road-surface reflection intensity and the second road-surface reflection intensity) of the paired transmission and reception units that are in the symmetrical positional relationship and are installed at the same height. This makes it possible to detect an abnormality in the transmission and reception unit with high accuracy using a simple configuration.

In addition, in the above embodiment, the first road-surface reflection intensity includes the intensity of the road-surface reflection wave from the road surface directly below one transmission and reception unit, the second road-surface reflection intensity includes the intensity of the road-surface reflection wave from the road surface directly below the other transmission and reception unit, and the abnormality detection unit 103 determines that there is an abnormality in a case where the difference ΔI between the first road-surface reflection intensity and the second road-surface reflection intensity is larger than the threshold K1. Since the intensity of the road-surface reflection wave from the road surface directly below the transmission and reception unit 21 can be detected with relatively high accuracy by the directivity of the ultrasonic wave, an abnormality in the transmission and reception unit 21 can be detected with high accuracy by employing the above configuration.

Furthermore, in the above embodiment, on the basis of at least one of the first road-surface reflection intensity and the second road-surface reflection intensity in the normal state, the abnormality detection unit 103 corrects at least one of the difference or the threshold used at the time of the abnormality detection so as to reduce the influence of the error between the first road-surface reflection intensity and the second road-surface reflection intensity generated between the pair of normal transmission and reception units 21. As a result, the abnormality detection accuracy can be improved.

Hereinafter, other embodiments will be described with reference to the drawings, but the description of the same or similar parts as those of the first embodiment will be appropriately omitted.

### (Second Embodiment)

An object detection device 11 according to a second embodiment is different from that of the first embodiment in that the presence or absence of an abnormality is determined on the basis of not only a road-surface reflection wave from a road surface directly below a transmission and reception unit 21 but also a road-surface reflection wave from a road surface in a predetermined diffuse reflection region.

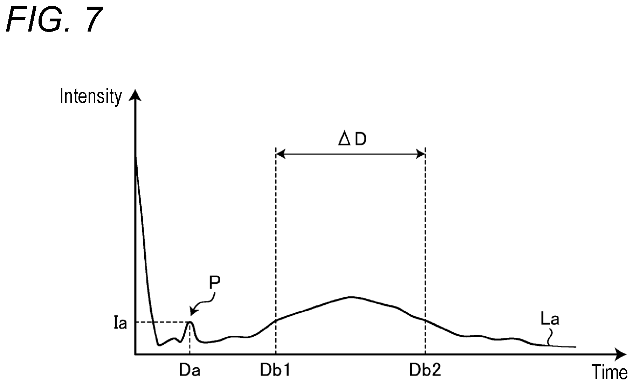

FIG. 7 is a diagram illustrating an example of a diffuse reflection region ΔD according to the second embodiment. The diffuse reflection region ΔD is a region determined in advance within a range farther than directly below a pair of transmission and reception units 21. The diffuse reflection region ΔD is preferably a region where the intensity of a reflected wave (a diffuse road-surface reflection wave) obtained by the transmission wave transmitted from the pair of transmission and reception units 21 being diffused and reflected by the road surface is relatively large. Since the region where the intensity of the diffuse road-surface reflection wave is relatively large differs depending on the directivity of an ultrasonic wave or the like, the diffuse reflection region ΔD should be appropriately set depending on the installation position of the transmission and reception unit 21 to be used and the characteristics (the frequency component or the like) of the ultrasonic wave.

The diffuse reflection region ΔD illustrated here is a region from a distance Db1 to a distance Db2. The relationship Da < Db1 < Db2 is satisfied between the distances Db1 and Db2 defining the diffuse reflection region ΔD and a distance Da corresponding to the peak P (the road-surface reflection wave from directly below the transmission and reception unit 21).

The abnormality detection unit 103 according to the present embodiment determines the presence or absence of an abnormality on the basis of the variation in the intensity of the reflected wave (the diffuse road-surface reflection wave) from the road surface in diffuse reflection region ΔD between one transmission and reception unit (for example, the transmission and reception unit 21A) and the other transmission and reception unit (for example, the transmission and reception unit 21D). For example, in a case where the road-surface reflection intensity Ia of the road surface directly below the transmission and reception unit 21 described above is larger than a threshold and the variation in the intensity of the diffuse road-surface reflection wave is larger than a threshold, the abnormality detection unit 103 determines that at least one of the transmission and reception units 21 has an abnormality.

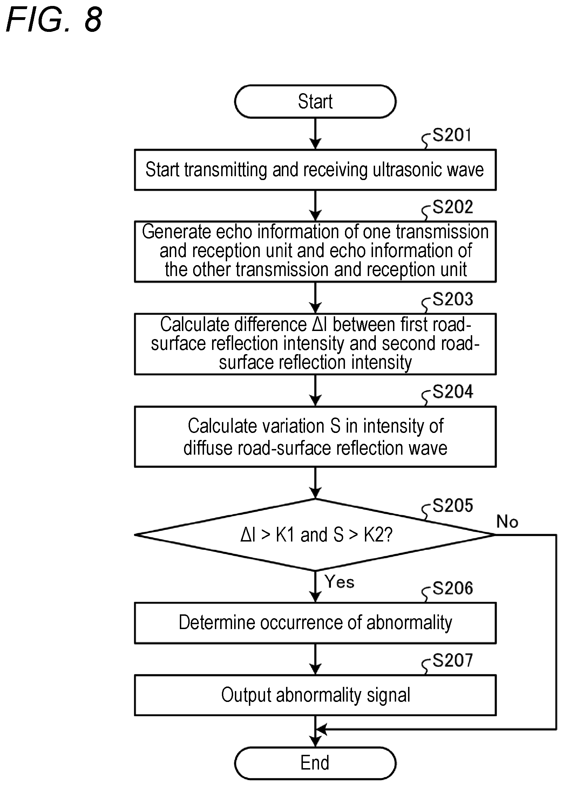

FIG. 8 is a flowchart illustrating an example of processing in the object detection device 11 according to the second embodiment. When the transmission and reception unit 21 starts transmitting and receiving an ultrasonic wave in step S201, the echo information generation unit 101 generates echo information of one transmission and reception unit (here, the transmission and reception unit 21A) and echo information of the other transmission and reception unit (here, the transmission and reception unit 21D) of the pair of transmission and reception units (here, the transmission and reception units 21A and 21D) in step S202.

In step S203, the road-surface reflection intensity calculation unit 102 calculates the difference ΔI between the first road-surface reflection intensity Ia corresponding to one transmission and reception unit 21A and the second road-surface reflection intensity Ia corresponding to the other transmission and reception unit 21D on the basis of the generated echo information.

In step S204, the road-surface reflection intensity calculation unit 102 calculates a variation S in the intensity of the diffuse road-surface reflection wave from the diffuse reflection region ΔD between one transmission and reception unit 21A and the other transmission and reception unit 21D on the basis of the generated echo information.

In step S205, the abnormality detection unit 103 determines whether or not the difference ΔI is larger than a threshold K1 and the variation S is larger than a threshold K2. In step S205, in a case where the difference ΔI is not larger than the threshold K1 or the variation S is not larger than the threshold K2 (S205: No), the abnormality detection unit 103 determines that the pair of transmission and reception units 21A and 21D is normal, and this routine ends.

In step S205, in a case where the difference ΔI is larger than the threshold K1 and the variation S is larger than the threshold K2 (S205: Yes), in step S206, the abnormality detection unit 103 determines that at least one of the pair of transmission and reception units 21A and 21D has an abnormality, and in step S207, the output unit 104 outputs an abnormality signal indicating the occurrence of the abnormality.

As described above, according to the present embodiment, the presence or absence of an abnormality is determined in consideration of not only the difference ΔI in the intensity of the road-surface reflection wave from directly below the transmission and reception unit 21 but also the variation S in the intensity of the road-surface reflection wave from the diffuse reflection region ΔD. As a result, the abnormality detection accuracy can be improved.

Note that the presence or absence of an abnormality may be determined on the basis of only the variation S in the intensity of the road-surface reflection wave from the diffuse reflection region ΔD without considering the difference ΔI in the intensity of the road-surface reflection wave from directly below the transmission and reception unit 21.

Furthermore, in the embodiments described above, the configuration in which the ultrasonic wave is used as a wave transmitted and received for detecting an obstacle has been exemplified, but the configuration of the object detection device is not limited thereto. For example, a millimeter-wave radar or the like may be used.

The program that causes a computer (for example, the processor 43 or the like) to execute processing of implementing the function of the object detection device described above can be provided by being recorded in a computer-readable recording medium such as a CD (compact disc)-ROM, a flexible disk (FD), a CD-R (recordable), and a digital versatile disk (DVD) as a file in an installable format or an executable format. Furthermore, the program may be provided or distributed via a network such as the Internet.

Although the embodiments of the present invention have been described above, the embodiments and modifications described above are merely examples, and are not intended to limit the scope of the invention. These novel embodiments and modifications described above can be implemented in various other forms, and various omissions, substitutions, and changes can be made without departing from the gist of the invention. These embodiments and modifications described above are included in the scope and gist of the invention, and are included in the invention described in the claims and the equivalent scope thereof.

### [Summary of Present Embodiment]

The present embodiment includes at least the following configuration.

An object detection device (11) according to the embodiment is an object detection device (11) that detects an obstacle present around a mobile object (1) on a basis of intensity of a reflected wave generated by a transmission wave transmitted from the mobile object (1) being reflected by an object, the object detection device including a plurality of transmission and reception units (21) each of which is configured to transmit the transmission wave and receive the reflected wave, a road-surface reflection intensity calculation unit (102) configured to calculate, on a basis of the reflected wave received by each of a pair of transmission and reception units (21) that are in a symmetrical positional relationship in a shape of the mobile object (1) and are installed at a same height among the plurality of transmission and reception units (21), first road-surface reflection intensity (Ia) that is intensity of the reflected wave from a road surface (G) received by one transmission and reception unit (21) of the pair of transmission and reception units (21) and second road-surface reflection intensity (Ia) that is intensity of the reflected wave from a road surface (G) received by the other transmission and reception unit (21) of the pair of transmission and reception units (21), and an abnormality detection unit (103) configured to detect an abnormality in at least one of the pair of transmission and reception units (21) on a basis of a difference between the first road-surface reflection intensity (Ia) and the second road-surface reflection intensity (Ia).

According to this configuration, it is possible to detect an abnormality in the transmission and reception unit (21) with high accuracy using a simple configuration.

In the object detection device (11) according to the embodiment, for example, the first road-surface reflection intensity (Ia) includes intensity of the reflected wave from a road surface (G) directly below the one transmission and reception unit (21), the second road-surface reflection intensity (Ia) includes intensity of the reflected wave from a road surface (G) directly below the other transmission and reception unit (21), and the abnormality detection unit (103) determines that there is an abnormality in a case where a difference between the first road-surface reflection intensity (Ia) and the second road-surface reflection intensity (Ia) is larger than a threshold.

According to this configuration, it is possible to detect an abnormality in the transmission and reception unit (21) with high accuracy.

In the object detection device (11) according to the embodiment, for example, the abnormality detection unit (103) determines presence or absence of an abnormality on a basis of a variation in intensity of the reflected wave from a road surface (G) in a predetermined diffuse reflection region (ΔD) farther than directly below the pair of transmission and reception units (21) between the one transmission and reception unit (21) and the other transmission and reception unit (21).

According to this configuration, the abnormality detection accuracy of the transmission and reception unit (21) can be improved.

In the object detection device (11) according to the embodiment, for example, on a basis of at least one of the first road-surface reflection intensity (Ia) and the second road-surface reflection intensity (Ia) in a normal state, the abnormality detection unit (103) corrects at least one of the first road-surface reflection intensity (Ia), the second road-surface reflection intensity (Ia), and the difference used at a time of abnormality detection so as to reduce an influence of an error between the first road-surface reflection intensity (Ia) and the second road-surface reflection intensity (Ia) generated between the pair of transmission and reception units (21) in a normal state.

According to this configuration, the abnormality detection accuracy of the transmission and reception unit (21) can be improved.

In the object detection device (11) according to the embodiment, for example, the abnormality detection unit (103) determines presence or absence of an abnormality on a basis of a variation in intensity of the reflected wave from a road surface (G) in a predetermined diffuse reflection region (ΔD) farther than directly below the pair of transmission and reception units (21) between the one transmission and reception unit (21) and the other transmission and reception unit (21), and the diffuse reflection region (ΔD) is set depending on at least one of installation positions of the plurality of transmission and reception units (21) and characteristics of the transmission waves transmitted by the plurality of transmission and reception units (21).

According to this configuration, the abnormality detection accuracy of the transmission and reception unit (21) can be improved.

### REFERENCE SIGNS LIST

1: Vehicle (mobile object), 11: Object detection device, 21, 21A to 21L: Transmission and reception unit, 102: Road-surface reflection intensity calculation unit, 103: Abnormality detection unit, Ia: Road-surface reflection intensity, and ΔD: Diffuse reflection region

## Claims

1. An object detection device that detects an obstacle present around a mobile object on a basis of intensity of a reflected wave generated by a transmission wave transmitted from the mobile object being reflected by an object, the object detection device comprising:
a plurality of transmission and reception units each of which is configured to transmit the transmission wave and receive the reflected wave;
a road-surface reflection intensity calculation unit configured to calculate, on a basis of the reflected wave received by each of a pair of transmission and reception units that are in a symmetrical positional relationship in a shape of the mobile object and are installed at a same height among the plurality of transmission and reception units, first road-surface reflection intensity that is intensity of the reflected wave from a road surface received by one transmission and reception unit of the pair of transmission and reception units and second road-surface reflection intensity that is intensity of the reflected wave from a road surface received by the other transmission and reception unit of the pair of transmission and reception units; and
an abnormality detection unit configured to detect an abnormality in at least one of the pair of transmission and reception units on a basis of a difference between the first road-surface reflection intensity and the second road-surface reflection intensity.

2. The object detection device according to claim 1, wherein
the first road-surface reflection intensity includes intensity of the reflected wave from a road surface directly below the one transmission and reception unit,
the second road-surface reflection intensity includes intensity of the reflected wave from a road surface directly below the other transmission and reception unit, and
the abnormality detection unit determines that there is an abnormality in a case where a difference between the first road-surface reflection intensity and the second road-surface reflection intensity is larger than a threshold.

3. The object detection device according to claim 2, wherein the abnormality detection unit determines presence or absence of an abnormality on a basis of a variation in intensity of the reflected wave from a road surface in a predetermined diffuse reflection region farther than directly below the pair of transmission and reception units between the one transmission and reception unit and the other transmission and reception unit.

4. The object detection device according to any one of claims 1 to 3, wherein on a basis of at least one of the first road-surface reflection intensity and the second road-surface reflection intensity in a normal state, the abnormality detection unit corrects at least one of the first road-surface reflection intensity, the second road-surface reflection intensity, and the difference used at a time of abnormality detection so as to reduce an influence of an error between the first road-surface reflection intensity and the second road-surface reflection intensity generated between the pair of transmission and reception units in a normal state.

5. The object detection device according to claim 1, wherein
the abnormality detection unit determines presence or absence of an abnormality on a basis of a variation in intensity of the reflected wave from a road surface in a predetermined diffuse reflection region farther than directly below the pair of transmission and reception units between the one transmission and reception unit and the other transmission and reception unit, and
the diffuse reflection region is set depending on at least one of installation positions of the plurality of transmission and reception units and characteristics of the transmission waves transmitted by the plurality of transmission and reception units.
